# FASCICULE DE BREVET EUROPEEN

(11) **EP 0 853 015 B1**
(45) Date de publication et mention de la délivrance du brevet: **22.06.2011**
(21) Numéro de dépôt: 98400028.1
(22) Date de dépôt: 09.01.1998
(51) Int. Cl.: B60K 35/00

(54) **Dispositif et procédé d'affichage d'informations sur le poste de conduite d'un véhicule routier**
Vorrichtung und Verfahren zur Anzeige von Informationen auf dem Fahrerstand eines Strassenfahrzeuges
Method and device for indicating information on the driver's post of a road vehicle

(30) Priorité: 10.01.1997 FR 9700181
(43) Date de publication de la demande: 15.07.1998
(73) Titulaire: Renault s.a.s., 92100 Boulogne Billancourt (FR)
(72) Inventeur: Doignon, Philippe, 75011 Paris (FR); Velay, Michel, 78640 Saint Germain de la Grange (FR)

(56) Documents cités:
- EP-A- 0 562 332
- DE-A- 4 140 864
- DE-A- 4 407 855
- FR-A- 2 727 559
- PATENT ABSTRACTS OF JAPAN vol. 095, no. 004, 31 mai 1995 & JP 07 009885 A (YAZAKI CORP), 13 janvier 1995,

## Description

La présente invention se rapporte à l'affichage d'informations sur le poste de conduite d'un véhicule routier. Elle concerne un dispositif applicable sur tout type de véhicule, et un procédé permettant de contrôler cet affichage en fonction de priorités liées notamment à la sécurité.

Le développement des systèmes d'aide à la conduite embarqués pose un problème pratique de restitution d'informations. Ce problème résulte dans une large mesure de l'augmentation considérable du nombre de voyants lumineux de fonctionnement ou d'alerte jugés indispensables, et de la réduction de la place disponible sur le tableau de bord pour implanter ces voyants. Outre ces contraintes d'encombrement, les systèmes d'affichage doivent tenir compte des difficultés rencontrés par certains utilisateurs pour comprendre toutes les informations restituées, et de la nécessité de gérer des priorités d'affichage, notamment en situation d'alerte.

Pour augmenter le nombre des voyants lumineux intégrés sur un tableau de bord, on utilise le plus souvent des afficheurs matriciels de tailles diverses, tels que des écrans ou «vignettes» matricielles monochromes de technologie L.C.D (Liquid Cristal Device), permettant de représenter n'importe quel pictogramme, avec un nombre de pixels suffisant.

Pour pouvoir afficher, selon les circonstances, des images de couleurs différentes sur un même écran L.C.D, il est connu de placer des diodes derrière celui-ci. Cette disposition n'est cependant compatible qu'avec des écrans de type «transmissif» (tels que les écrans L.C.D), où la lumière n'est pas fournie par l'écran lui-même, mais traverse simplement celui-ci à la façon d'un masque.

En effet, une telle disposition n'est pas adaptable à des écrans «émissifs», par exemple aux écrans de technologie V.F.D (Vacuum Fluorescent Display).

Enfin, il existe des écrans L.C.D à matrice active, permettant de faire apparaître directement plusieurs couleurs sur un même voyant. Le coût particulièrement élevé de ces afficheurs freine cependant leur utilisation.

Le document FR-2 727 559 montre un dispositif d'affichage d'informations incluant les caractéristiques du préambule de la première revendication.

La présente invention vise à afficher des images de couleurs différentes sur un même voyant lumineux, à partir d'un écran d'affichage de type quelconque.

Elle propose un dispositif d'affichage d'informations sur le poste de conduite d'un véhicule.

Ce dispositif est caractérisé en ce qu'il comporte un écran d'affichage monochrome où l'information apparaît sous forme de signes lumineux sur un fond noir, une source lumineuse annexe de couleur variable et une surface réfléchissante placée sur le trajet des rayons lumineux issus respectivement de l'écran et de la source, de façon à transmettre en direction du conducteur une image des signes lumineux, apparaissant sur un fond de même couleur que la source.

La surface réfléchissante est une lame transparente placée à égale distance de l'écran et de la source.

L'invention propose également un procédé d'affichage d'informations sur le poste de conduite d'un véhicule, sous forme de signes lumineux s'inscrivant sur une zone dédiée d'un écran d'affichage monochrome.

Ce procédé est caractérisé en ce que la couleur de fond de l'image des zones d'affichage dédiées peut être modifiée, en superposant à cette image, celle d'une source de lumière distincte, de couleur variable.

Conformément à l'invention, cette modification s'effectue sous le contrôle d'une unité de calcul échangeant des informations avec des capteurs et/ou des calculateurs du véhicule, avec au moins une ampoule colorée, et avec l'écran d'affichage.

D'autres caractéristiques et avantages de la présente invention apparaîtront clairement à la lecture de la description suivante d'un mode de réalisation particulier de celle-ci, en liaison avec les dessins annexés, sur lesquels :
- les figures 1A et 1B correspondent respectivement à une coupe transversale et à une vue de face du dispositif proposé, et
- la figure 2 illustre un mode de réalisation particulier de l'invention.

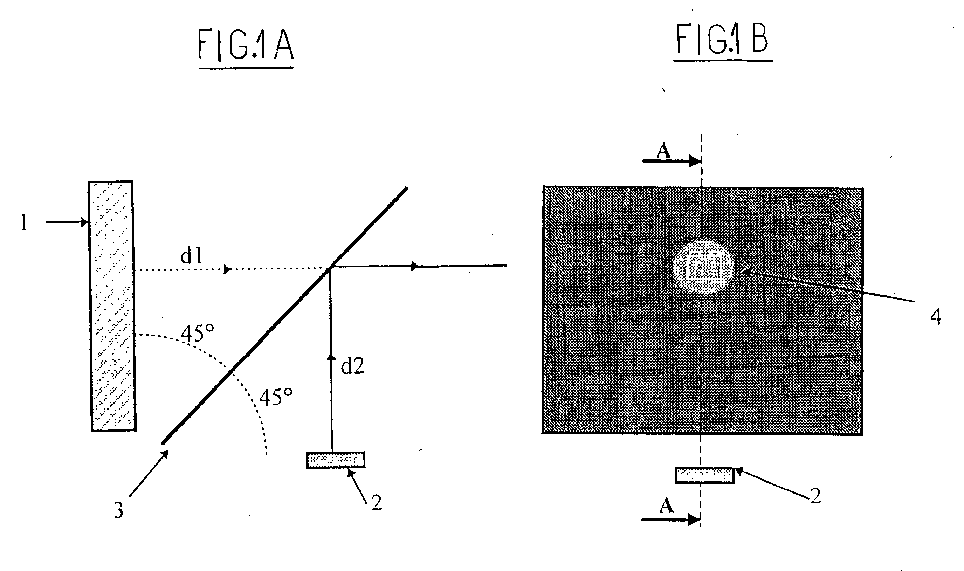

Sur les figures, on a représenté schématiquement un écran d'affichage 1, tel qu'un afficheur matriciel monochrome de tableau de bord. L'écran 1 présente de façon connue une ou plusieurs zones d'affichage dédiées 4, sur lesquelles peuvent s'inscrire différents signes ou pictogrammes lumineux du type de l'indicateur de charge de batterie, apparaissant à titre d'exemple non limitatif sur la figure 1B.

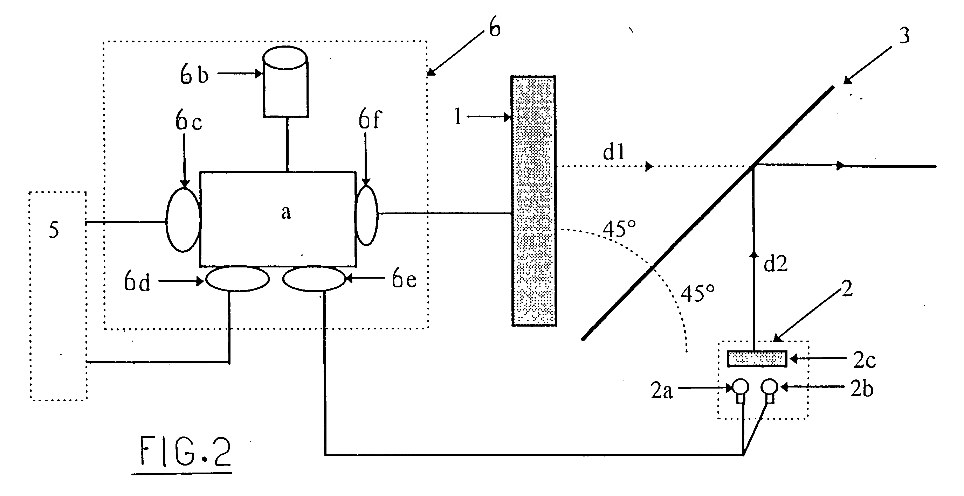

Une source lumineuse annexe 2, orthogonale à l'écran 1 sur les figures 1A et 2 (sans que cette disposition ne soit obligatoire), envoie des rayons lumineux d₂ en direction d'une lame transparente 3, assurant leur réflexion en direction du conducteur.

Conformément à l'invention, la lame 3 est placée à égale distance de l'écran 1 et de la source 2, de façon à superposer l'image de la zone dédiée 4 transmise par les rayons d₁, avec celle de la source 2, transmise par les rayons d₂. Cette disposition vise à modifier aux yeux du conducteur la couleur du fond de la zone dédiée. Dans le cas habituel où l'écran 1 est noir, la couleur du «voyant» constitué par la zone dédiée 4 devient donc celle de la source 2. De la façon la plus simple, la source 2 peut être constituée par deux ampoules de couleurs différentes 2a, 2b, placées derrière un élément diffuseur 2c (cf figure 2), dont l'allumage séparé ou simultané permet de disposer d'au moins trois couleurs de fond distinctes pour chaque zone dédiée 4 de l'écran 1, mais on peut bien entendu adopter un nombre d'ampoules différent, ou de façon plus générale, utiliser tout type de source lumineuse capable d'émettre des rayons d₂ de couleur déterminée en direction de la lame 3, sans pour autant sortir du cadre de l'invention.

Sur la figure 2, on retrouve l'ensemble de ces éléments, et en particulier les deux ampoules 2a, 2b, et l'élément diffuseur 2c, constituant la source 2, mentionnés plus haut. Par ailleurs, cette figure fait apparaître différentes unités fonctionnelles intervenant dans la mise en oeuvre du procédé d'affichage proposé par l'invention.

Ce procédé est contrôlé par une unité de calcul 6, échangeant notamment des informations avec des capteurs et/ou des calculateurs embarqués regroupés sous la référence commune 5, avec les ampoules 2a et 2c (ou avec toute autre source de lumière selon d'autres modes de réalisation de l'invention non décrits), et avec l'écran 1.

Le calculateur 6 se compose par exemple d'un microprocesseur 6a, d'une mémoire 6b, où sont stockés les différents signes affichables sur l'écran 1, d'une interface 6c avec un bus de communication multiplexé gérant éventuellement l'échange des informations entre les capteurs calculateurs 5 d'une part, et le microprocesseur 6a d'autre part, d'entrées tout ou rien 6d en provenance desdits capteurs ou calculateurs 5, de sorties tout ou rien 6e, en direction des ampoules 2a, 2b, et d'une interface 6f avec le dispositif d'affichage proprement dit.

Selon un mode de réalisation particulier de l'invention, l'affichage coloré peut être réservé aux situations d'alerte, de sorte qu'en situation normale, la source 2 n'est pas sollicitée, et le conducteur ne voit apparaître que des signes blancs sur un fond neutre, d'autant plus foncé que la lame 3 est fumée. Cette disposition particulière, n'a cependant aucun caractère contraignant.

Conformément à l'invention, l'affichage peut être contrôlé de la façon suivante. Les différents capteurs ou calculateurs 5 du véhicule font parvenir au microprocesseur 6a l'ordre d'allumer ou d'éteindre un «voyant», par l'intermédiaire des entrées tout ou rien 6d, ou de l'interface 6c avec un bus de communication multiplexé. Outre ces transferts d'informations, l'interface 6c peut avantageusement intervenir dans la récupération d'autres données à afficher, telles que des données transmises par la radio. A l'aide d'une «table de priorités» contenue dans sa mémoire 6b, le microprocesseur 6a décide si l'ordre d'allumer un voyant doit être répercuté à l'écran 1.

Lorsque l'ordre ne doit pas être répercuté, il peut être conservé dans la mémoire 6b, en vue d'être exécuté ultérieurement. Dans le cas contraire, le microprocesseur extrait de la mémoire 6b le signe correspondant, et l'envoie à l'écran par l'intermédiaire de l'interface 6f. Le signe s'affiche alors sur l'écran. Dans le même temps, le microprocesseur peut commander l'allumage d'une lampe 2a, 2b par l'intermédiaire d'une sortie tout ou rien 6e pour superposer sur la lame 3 des rayons colorés d₂ avec l'image de la zone 4 dédiée à l'affichage des signes apparaissant sur l'écran.

L'affichage du «voyant» sur l'écran 1 et l'éclairage de la lame 3 par la source 2 sont interrompus sur ordre du microprocesseur 6a, et remplacés éventuellement par l'affichage d'un «voyant» de moindre priorité, coloré ou non, s'il est prévu dans la mémoire 6b.

En conclusion, la présente invention permet de coloriser une «vignette matricielle» monochrome pour un coût très faible. On peut également noter que l'encombrement des voyants réalisés grâce à l'invention est particulièrement réduit, et que les dispositions de commande proposées assurent dans les meilleures conditions l'indispensable gestion des priorités d'affichage.

## Revendications

1. Dispositif d'affichage d'informations pour le poste de conduite d'un véhicule comportant un écran d'affichage monochrome (1) présentant une ou plusieurs zones d'affichage dédiées (4) et une source lumineuse annexe (2) qui envoie des rayons lumineux (d2) sur une lame transparente (3) assurant leur réflexion en direction du conducteur et placée sur le trajet lumineux des rayons (d1, d2) issus respectivement de l'écran (1) et de la source (2), à égale distance de ces derniers de façon à superposer l'image des zones dédiées (4) avec celle de la source (2),
**caractérisé en ce que** l'information apparaît sur les zones d'affichage dédiées (4) sous forme de signes lumineux sur un fond noir, et **en ce que** la source lumineuse (2) est de couleur variable, de manière à modifier aux yeux du conducteur la couleur du fond des zones dédiées (4) .

2. Dispositif d'affichage selon la revendication 1, **caractérisé en ce que** l'écran (1) et la source (2) sont orthogonaux.

3. Dispositif d'affichage selon la revendication 1 ou 2, **caractérisé en ce que** la source (2) comporte au moins une ampoule colorée (2a, 2b), placée derrière un élément diffuseur (2c).

4. Procédé d'affichage d'informations sur le poste de conduite d'un véhicule sous forme de signes lumineux s'inscrivant sur une zone dédiée (4) d'un écran d'affichage monochrome (1), **caractérisé en ce que** la couleur de fond de l'image des zones d'affichage dédiées (4) peut être modifiée, en superposant à cette image celle d'une source de lumière distincte (2), de couleur variable.

5. Procédé d'affichage selon la revendication 4, **caractérisé en ce que** cette modification s'effectue sous le contrôle d'une unité de calcul (6) échangeant des informations avec des capteurs et/ou des calculateurs (5) du véhicule, avec au moins une ampoule colorée (2a, 2b), et avec l'écran d'affichage (1).

6. Procédé d'affichage selon la revendication 5, **caractérisé en ce que** les signes affichables sont mémorisés dans l'unité de calcul (6).

7. Procédé d'affichage selon la revendication 5 ou 6, **caractérisé en ce que** l'unité de calcul (6) gère des priorités relatives à l'affichage de différentes informations.

8. Procédé d'affichage selon la revendication 4, 6 ou 7, **caractérisé en ce que** l'unité de calcul (6) peut différer l'affichage de certaines informations.

9. Procédé d'affichage selon l'une des revendications 4 à 7, **caractérisé en ce que** la variation de couleur de la source (2) est obtenue en allumant différentes ampoules (2a, 2b).

## Claims

1. Device for displaying information for the driver's position of a vehicle comprising a monochrome display screen (1) having one or more dedicated display zones (4) and an associated light source (2) which sends light rays (d2) onto a transparent sheet (3) ensuring that they reflect in the direction of the driver and which is placed on the light path of the rays (d1, d2) originating respectively from the screen (1) and from the source (2), at an equal distance from the latter so as to superpose the image of the dedicated zones (4) with that of the source (2), **characterized in that** the information appears on the dedicated display zones (4) in the form of light signs on a black background, and **in that** the light source (2) is of variable colour, so as to modify in the eyes of the driver the colour of the background of the dedicated zones (4).

2. Display device according to Claim 1, **characterized in that** the screen (1) and the source (2) are orthogonal.

3. Display device according to Claim 1 or 2, **characterized in that** the source (2) comprises at least one coloured bulb (2a, 2b) placed behind a diffusing element (2c).

4. Method for displaying information on the driver's position of a vehicle in the form of light signs being registered on a dedicated zone (4) of a monochrome display screen (1), **characterized in that** the background colour of the image of the dedicated display zones (4) can be modified by superposing on this image that of a distinct light source (2) of variable colour.

5. Display method according to Claim 4, **characterized in that** this modification is made under the control of a computing unit (6) interchanging information with sensors and/or computers (5) of the vehicle, with at least one coloured bulb (2a, 2b) and with the display screen (1).

6. Display method according to Claim 5, **characterized in that** the displayable signs are stored in the computing unit (6).

7. Display method according to Claim 5 or 6, **characterized in that** the computing unit (6) manages priorities relating to the display of different items of information.

8. Display method according to Claim 4, 5 or 6, **characterized in that** the computing unit (6) can defer the display of certain items of information.

9. Display method according to one of Claims 4 to 7, **characterized in that** the variation in colour of the source (2) is obtained by lighting up various bulbs (2a, 2b).

## Patentansprüche

1. Informationsanzeigevorrichtung für den Fahrerplatz eines Fahrzeugs, die einen monochromen Anzeigebildschirm (1), der eine oder mehrere dedizierte Anzeigezonen (4) hat, und eine Nebenlichtquelle (2) aufweist, die Lichtstrahlen (d2) auf eine transparente Lamelle (3) schickt, welche ihre Reflektion in Richtung des Fahrers gewährleistet und im Lichtweg der Strahlen (d1, d2) angeordnet ist, die vom Bildschirm (1) bzw. von der Quelle (2) stammen, in gleichem Abstand zu diesen letzteren, um das Bild der dedizierten Zonen (4) und dasjenige der Quelle (2) einander zu überlagern,
**dadurch gekennzeichnet, dass** die Information in den dedizierten Anzeigezonen (4) in Form von Leuchtzeichen auf schwarzem Grund erscheint, und dass die Lichtquelle (2) eine variable Farbe hat, um die Farbe des Hintergrunds der dedizierten Zonen (4) für die Augen des Fahrers zu verandern.

2. Anzeigevorrichtung nach Anspruch 1, **dadurch gekennzeichnet, dass** der Bildschirm (1) und die Quelle (2) orthogonal sind.

3. Anzeigevorrichtung nach Anspruch 1 oder 2, **dadurch gekennzeichnet, dass** die Quelle (2) mindestens eine farbige Glühbirne (2a, 2b) aufweist, die hinter einem Diffusorelement (2c) angeordnet ist.

4. Verfahren zur Anzeige von Informationen am Fahrerplatz eines Fahrzeugs in Form von Leuchtzeichen, die in einer dedizierten Zone (4) eines monochromen Bildschirms (1) erscheinen, **dadurch gekennzeichnet, dass** die Hintergrundfarbe des Bilds der dedizierten Anzeigezonen (4) verandert werden kann, indem dieses Bild durch dasjenige einer anderen Lichtquelle (2) variabler Farbe überlagert wird.

5. Anzeigeverfahren nach Anspruch 4, **dadurch gekennzeichnet, dass** diese Änderung unter der Steuerung durch eine Recheneinheit (6), die Informationen mit Sensoren und/oder Rechnern (5) des Fahrzeugs austauscht, mit mindestens einer farbigen Glühbirne (2a, 2b) und mit dem Anzeigebildschirm (1) durchgeführt wird.

6. Anzeigeverfahren nach Anspruch 5, **dadurch gekennzeichnet, dass** die anzeigbaren Zeichen in der Recheneinheit (6) gespeichert sind.

7. Anzeigeverfahren nach Anspruch 5 oder 6, **dadurch gekennzeichnet, dass** die Recheneinheit (6) Prioritäten bezüglich der Anzeige verschiedener Informationen verwaltet.

8. Anzeigeverfahren nach Anspruch 4, 5 oder 6, **dadurch gekennzeichnet, dass** die Recheneinheit (6) die Anzeige bestimmter Informationen verzögern kann.

9. Anzeigeverfahren nach einem der Ansprüche 4 bis 7, **dadurch gekennzeichnet, dass** die Farbanderung der Quelle (2) durch Einschalten verschiedener Glühbirnen (2a, 2b) erhalten wird.
